# FASCICULE DE BREVET EUROPEEN

(11) **EP 2 926 029 B1**
(45) Date de publication et mention de la délivrance du brevet: **22.11.2017**
(21) Numéro de dépôt: 13808130.2
(22) Date de dépôt: 29.11.2013
(51) Int. Cl.: F16H 1/16, F16H 57/039, B62D 5/04, F16H 57/12, F16H 57/021, F16H 57/022

(54) **RÉDUCTEUR À ENGRENAGE AVEC BOUCHON D'ÉTANCHÉITÉ ASSURANT LE MAINTIEN AXIAL D'UN RESSORT DE RATTRAPAGE DU JEU D'ENGRÈNEMENT**
UNTERSETZUNGSGETRIEBE MIT EINEM VERSCHLUSSSTOPFEN ZUR AXIALEN STÜTZUNG EINER FEDER ZUR ABSORPTION DES GETRIEBESPIELS
GEAR REDUCER HAVING A SEALING PLUG PROVIDING AXIAL SUPPORT TO A SPRING FOR TAKING UP GEAR PLAY

(30) Priorité: 03.12.2012 FR 1261552
(43) Date de publication de la demande: 07.10.2015
(73) Titulaire: JTEKT Europe, 69540 Irigny (FR)
(72) Inventeur: CHAUVRAT, Philippe, 01480 Villeneuve (FR); GEX, Caroline, 89100 SENS (FR)
(74) Mandataire: Chevalier, Renaud Philippe
(86) Numéro de dépôt international: PCT/FR2013/052899
(87) Numéro de publication internationale: WO 2014/087080

(56) Documents cités:
- EP-A1- 1 671 871
- EP-A1- 2 428 430
- EP-A1- 2 492 167

## Description

La présente invention se rapporte au domaine général des modules d'assistance de direction, et plus particulièrement aux réducteurs à engrenage utilisés au sein de tels modules.

Il est connu de disposer dans les modules d'assistance de direction, et plus particulièrement dans les modules d'assistance électriques, un réducteur à engrenage comprenant une vis sans fin qui est entraînée par le moteur d'assistance et qui engrène sur une roue tangente couplée à l'arbre de sortie du module d'assistance.

Afin de rattraper le jeu d'engrènement, et ainsi limiter les bruits parasites, notamment lorsque le couple transmis par le réducteur est faible, il est également connu d'interposer, entre le carter du module d'assistance et l'un des roulements soutenant la vis sans fin, un ressort conçu pour presser radialement ladite vis sans fin contre la denture de la roue tangente. Un réducteur selon le préambule de la revendication 1 est connu de EP 2 492 167 A1. Toutefois, il peut arriver que, sous l'effet notamment des vibrations auxquelles est soumis le module d'assistance, le ressort se déplace le long de l'axe de la vis sans fin, au point que l'on observe une diminution sensible de sa plage utile de rattrapage de jeu, et donc un risque d'apparition ou d'intensification des chocs entre dents et des bruits parasites.

Les objets assignés à l'invention visent par conséquent à remédier aux inconvénients susmentionnés et à proposer un nouvel agencement de réducteur à engrenage qui assure, de manière simple et peu coûteuse, un rattrapage de jeu d'engrènement durablement efficace.

Les objets assignés à l'invention sont atteints au moyen d'un réducteur à engrenage comprenant un carter, une vis sans fin qui est montée à rotation dans ledit carter par au moins un premier palier, tel qu'un roulement à billes, et qui engrène avec une roue tangente, ledit réducteur comprenant également un ressort de rattrapage de jeu d'engrènement interposé entre le carter et le premier palier afin de presser radialement ladite vis sans fin contre la denture de la roue tangente, la paroi du carter étant percée, dans le prolongement de l'axe de la vis sans fin, d'un orifice obturé par un bouchon, ledit réducteur étant caractérisé en ce que le ressort de rattrapage de jeu d'engrènement comprend au moins un ergot de retenue qui fait saillie radialement à l'axe de la vis sans fin et en ce que le moyeu du bouchon présente une paroi de guidage sensiblement transverse à l'axe de la vis, qui est conçue pour venir se placer axialement en vis-à-vis dudit au moins un ergot de retenue, de sorte à pouvoir coopérer avec ledit au moins un ergot de retenue pour faire obstacle au déplacement axial du ressort au-delà d'une course fonctionnelle prédéterminée.

Avantageusement, l'utilisation du bouchon, et plus particulièrement de la paroi terminale de son moyeu, comme butée axiale de maintien en position du ressort de rattrapage de jeu permet de limiter au strict minimum fonctionnel les déplacements axiaux dudit ressort, qui, ainsi préservé des dérives axiales, conserve sensiblement sa position le long de la vis sans fin, et par conséquent reste en toutes circonstances dans une plage de fonctionnement optimale, dans laquelle ledit ressort présente une bonne amplitude de déformation radiale associée à une raideur suffisante, quel que soit son niveau de déformation.

En d'autres termes, grâce à l'invention, le ressort de rattrapage de jeu conserve en permanence sa capacité à forcer efficacement, avec un niveau d'effort suffisant, le rapprochement radial de la vis sans fin contre la roue tangente, et ainsi à éviter tout relâchement susceptible de générer des chocs et des bruits parasites.

Bien entendu, le bouchon sera néanmoins agencé de sorte à ménager un certain jeu axial, correspondant à la légère mais nécessaire course axiale fonctionnelle du ressort (tout en étant conçu pour empêcher le ressort de dépasser cette course axiale fonctionnelle, tel qu'il a été dit ci-dessus).

Un tel dégagement axial fonctionnel permettra au mécanisme d'accommoder, sans coincer, la composante axiale de déplacement du ressort qui est susceptible d'accompagner le débattement radial dudit ressort, du palier et de la vis sans fin, lorsque ladite vis sans fin tend, selon la configuration instantanée du mécanisme et selon, entre autres, les tolérances de fabrication et d'assemblage de la vis et de la roue tangente, à se rapprocher ou à s'éloigner de l'axe de rotation de la roue tangente.

La vis sans fin pourra ainsi rester en permanence au contact précontraint de la roue tangente, et le cas échéant osciller radialement à cet effet, de façon cyclique, au gré de sa rotation et de celle de la roue tangente.

Avantageusement, l'importante étendue de la paroi de guidage capable de coopérer avec les ergots de retenue du ressort permet en outre d'offrir audit ressort un guidage particulièrement précis et stable, quelle que soit notamment la position radiale dudit ressort et de la vis sans fin ou, le cas échéant, quelle que soit l'orientation dudit ressort autour de l'axe de ladite vis sans fin.

Avantageusement, l'agencement conforme à l'invention permet par ailleurs d'utiliser une seule et même pièce, en l'occurrence le bouchon, tant pour fermer le carter que pour assurer le maintien en position du ressort de rattrapage de jeu, sans qu'il soit nécessaire de prévoir d'autres pièces intermédiaires, ce qui confère à l'invention un caractère particulièrement simple, compact, et léger, et qui rend ladite invention peu coûteuse à mettre en oeuvre.

De surcroît, en utilisant le bouchon pour procurer directement au ressort de rattrapage de jeu une paroi de retenue, on simplifie la chaîne de cotes qui définit, *via* le carter, le jeu axial fonctionnel accordé audit ressort, en limitant les sources d'erreurs liées aux tolérances de fabrication et d'assemblage, ce qui permet par conséquent au mécanisme de gagner en précision à moindre coût.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue d'ensemble en perspective éclatée, un exemple de réducteur pour module d'assistance de direction conforme à l'invention.
La figure 2 illustre, selon une vue partielle en coupe, dans le plan médian du ressort de rattrapage de jeu, normal à l'axe de la vis sans fin, le détail de l'agencement dudit ressort de rattrapage de jeu au sein du carter du réducteur de la figure 1.
La figure 3 illustre, selon une vue partielle en coupe longitudinale selon l'axe de la vis sans fin, le détail de l'agencement du réducteur des figures 1 et 2.
La figure 4 illustre, selon une vue d'ensemble en perspective, la variante de ressort de rattrapage de jeu utilisée au sein du réducteur des figures 1 à 3.
La figure 5 illustre, selon une vue d'ensemble en perspective, la variante de bouchon utilisée au sein du réducteur des figures 1 à 3.

La présente invention concerne un réducteur à engrenage 1, et plus particulièrement un réducteur à engrenage convenant pour un module d'assistance de direction 2 destiné à assister la conduite d'un véhicule, du genre véhicule automobile.

A ce titre, ledit réducteur 1 sera de préférence agencé de sorte à pouvoir restituer un couple pouvant atteindre entre 20 N.m et 110 N.m.

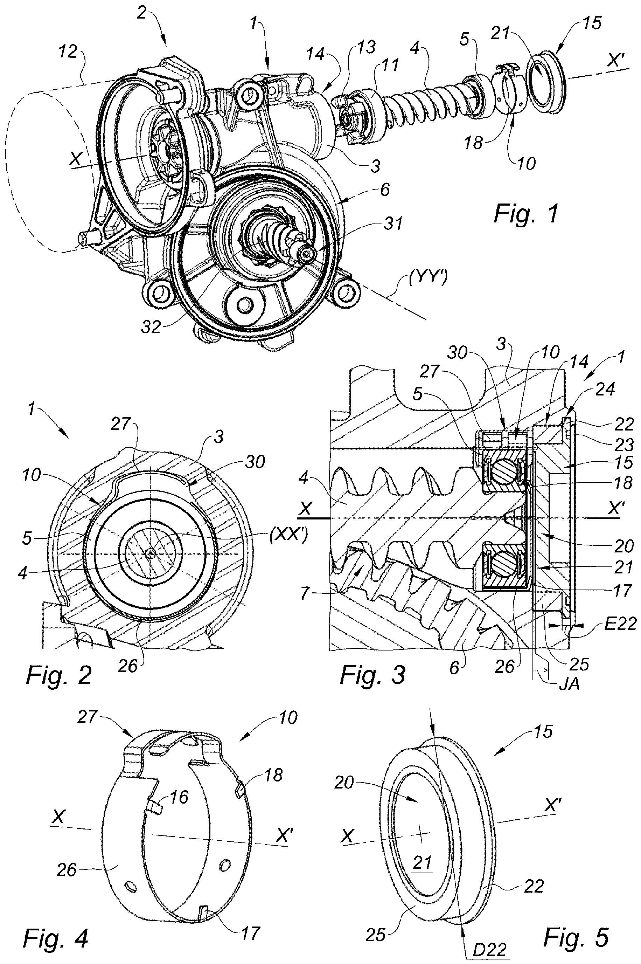

Tel que cela est notamment illustré sur les figures 1 et 3, le réducteur 1 comprend un carter 3, par exemple en alliage d'aluminium ou en matériau composite à matrice polymère renforcée de fibres.

Le réducteur 1 comprend également une vis sans fin 4 qui est montée à rotation dans ledit carter 3 par au moins un premier palier 5, tel qu'un roulement à billes, et qui engrène avec une roue tangente 6.

De façon classique, l'axe de rotation (XX') de la vis sans fin et l'axe de rotation (YY') de la roue tangente 6 sont superposés et croisés, et de préférence perpendiculaires (bien que d'autres configurations soient envisageables), de telle sorte que la vis 4 vient engrener tangentiellement sur la denture 7 de la roue 6 afin d'entraîner cette dernière.

Le réducteur 1 comprend également un ressort 10 de rattrapage de jeu d'engrènement interposé entre le carter 3 et le premier palier 5 afin de presser radialement la vis sans fin 4 contre la denture 7 de la roue tangente 6.

On notera que par « radial », ou « radialement », on fera référence, sauf mention contraire, à l'une ou l'autre direction transverse, et plus particulièrement sensiblement perpendiculaire, à l'axe (XX') de rotation de la vis sans fin 4, ou bien encore aux distances mesurées selon une telle direction par rapport audit axe.

De préférence, ledit ressort 10 vient en appui direct contre le carter 3, dans un logement de type chemise creusé dans ledit carter 3, pour exercer sur la vis sans fin 4 une précontrainte sensiblement radiale qui tend à repousser ladite vis vers l'axe (YY') de la roue 6.

Avantageusement, ledit ressort 10 forme un ressort de rattrapage du jeu de fonctionnement entre dents (ressort « *anti-backlash* »), qui améliore la qualité de l'engrènement en maintenant la vis 4 au contact de la denture 7 de la roue 6.

A cet effet, vis sans fin 4 et premier palier 5 forment un équipage monté mobile par rapport au carter 3, et soumis à la force de rappel du ressort 10.

La course radiale de l'équipage mobile 4, 5 sera bien entendu suffisante pour permettre à celui-ci d'accommoder les variations de configuration de contact liées notamment aux défauts géométriques des pièces ou de l'assemblage, à l'usure, ou aux phénomènes de dilatation thermique différentielle.

A cet effet, la vis sans fin 4 peut notamment être portée, à son extrémité opposée à celle portée par le premier palier 5, par un second palier 11 de type rotule, et couplée au moteur d'assistance 12 par un accouplement flexible 13, du genre crabot élastique, tel que cela est illustré sur la figure 1.

Selon l'invention, la paroi du carter 3 est percée, dans le prolongement de l'axe (XX') de la vis sans fin 4, d'un orifice 14 obturé par un bouchon 15.

De façon particulièrement préférentielle, l'orifice 14 formera un orifice d'accès conçu pour permettre l'introduction et le montage à l'intérieur du carter 3 au moins du premier palier 5 et/ou du ressort 10, voire également de la vis sans fin 4.

Ledit orifice 14 pourra également être utile lors d'opérations de maintenance, par exemple pour opérer une vidange ou au contraire un apport de lubrifiant (par exemple de graisse).

Le bouchon 15 assurera quant à lui avantageusement, après assemblage et en cours de fonctionnement, l'étanchéité du carter 3, et plus particulièrement l'étanchéité au lubrifiant, à la poussière, et/ou aux projections d'eau.

Selon l'invention, le ressort de rattrapage de jeu d'engrènement 10 comprend au moins un ergot de retenue 16, 17, 18 qui fait saillie radialement à l'axe (XX') de la vis sans fin 4, et le moyeu 20 du bouchon 15 présente une paroi de guidage 21 sensiblement transverse à l'axe (XX') de la vis sans fin 4.

Ladite paroi de guidage 21 est avantageusement conçue pour venir se placer axialement en vis-à-vis dudit au moins un ergot de retenue 16, 17, 18, de sorte à pouvoir coopérer avec ledit au moins un ergot de retenue 16, 17, 18 pour faire obstacle au déplacement axial du ressort 10 au-delà d'une course fonctionnelle prédéterminée.

Avantageusement, la paroi de guidage 21 sera placée axialement à une distance nominale fonctionnelle prédéterminée du ou des ergot(s), ladite distance fonctionnelle étant choisie de sorte à ménager un dégagement suffisant pour autoriser le débattement axial (course fonctionnelle) dudit ergot 16, 17, 18, et plus globalement de tout ou partie du ressort 10, lorsque ledit ergot 16, 17, 18 accompagne l'équipage mobile formé par la vis 4 et le premier palier 5 durant le mouvements radiaux d'adaptation dynamique de rattrapage de jeu d'engrènement.

Cependant, ladite distance fonctionnelle sera également suffisamment réduite pour permettre à la paroi de guidage 21 d'interagir avec l'ergot 16, 17, 18 en dressant, à l'encontre du déplacement axial dudit ergot 16, 17, 18 le long de la vis, en direction du bouchon 15, une butée de fin de course qui permet ainsi de contenir le débattement axial dudit ergot, et par conséquent du ressort 10 auquel il est rattaché, en deçà d'une limite prédéfinie, matérialisée par ladite paroi de guidage 21.

Ainsi, le bouchon 15 est utilisé non seulement comme organe de fermeture et d'étanchéité du carter 3, mais également et surtout comme borne axiale conçue pour maintenir le ressort 10 en place, c'est-à-dire dans une plage de positions axiales en tout point de laquelle le ressort 10 présente un comportement mécanique acceptable, lui permettant de maintenir en permanence une contrainte radiale de rattrapage de jeu efficace sur la vis sans fin 4.

A ce titre, le jeu axial J_{A} ménagé entre l'au moins un ergot de retenue 16, 17, 18 et la paroi de guidage 21 est de préférence inférieur ou égal à 2 mm, de préférence inférieur ou égal à 1 mm, voire à 0,8 mm, et préférentiellement supérieur ou égal à 0,3 mm, voire à 0,5 mm.

Avantageusement, en prévoyant, selon la chaîne de cotes applicable, un jeu axial J_{A} nominal non nul, on préserve la capacité de débattement radial de l'équipage mobile 4, 5 et des ergots 16, 17, 18, sans toutefois laisser subsister d'espace axial superflu, qui serait pénalisant pour la constance et l'efficacité du rattrapage de jeu d'engrènement.

De façon particulièrement préférentielle, la paroi de guidage 21 est sensiblement plane, et de préférence sensiblement normale à l'axe (XX') de la vis 4.

Ladite paroi de guidage 21 forme donc ainsi de préférence une rampe de glissement radial, au contact de laquelle le ou les ergots 16, 17, 18 peuvent glisser radialement, sans être entravés, lors des mouvements de rattrapage du jeu d'engrènement, en particulier lorsque la vis 4 bascule en flexion dans son second palier 11.

La paroi de guidage 21 forme de préférence la paroi terminale centrale pleine du bouchon 15, située sensiblement à l'extrémité axiale dudit bouchon, du côté de la vis 4, vers l'intérieur du carter 3.

Par ailleurs, tel que cela est illustré sur les figures 1, 3 et 5, le bouchon 15 présente de préférence une forme cylindrique de révolution, dont l'axe générateur correspondra de préférence à l'axe (XX') de rotation de la vis sans fin 4, et sera assimilé audit axe (XX') par commodité de description.

De préférence, tel que cela est notamment visible sur les figures 3 et 5, le moyeu 20 du bouchon 15 forme un cylindre plein lamé axialement, dont le fond du lamage axial forme la paroi de guidage 21.

Les extrémités axialement saillantes des ergots 16, 17, 18 pourront ainsi venir en appui dans le creux du lamage.

La profondeur axiale dudit lamage, correspondant à la hauteur de la jante circulaire qui délimite radialement ledit lamage, pourra avantageusement être adaptée au cas par cas selon le jeu axial J_{A} souhaité, et pourra en particulier correspondre sensiblement au jeu axial J_{A} fonctionnel prévu entre les extrémités axialement saillantes des ergots 16, 17, 18 et la paroi de guidage 21.

Par ailleurs, le bouchon 15 présente de préférence, tel que cela est notamment illustré sur les figures 3 et 5, une structure axialement étagée, qui comprend le moyeu 20, orienté vers le ressort 10, puis une collerette 22, orientée vers l'extérieur du carter 3, collerette 22 dont le diamètre (hors-tout) D22 est supérieur au diamètre dudit moyeu 20, de telle sorte que ladite collerette 22 forme un épaulement par rapport audit moyeu 20.

Selon une caractéristique préférentielle qui peut constituer une invention en tant que telle, la collerette 22 forme un clip élastique permettant la fixation du bouchon 15 au carter 3 par emboîtement.

Selon une variante de réalisation, la collerette 22 peut être venue de matière avec le moyeu 20, et plus particulièrement être formée dans un matériau plastique dur, du genre polyamide ou polyacétal (POM), dont la forme et les dimensions seront adaptées pour lui conférer tant la tenue que l'élasticité nécessaires à sa mise en place puis à son maintien dans l'orifice 14.

La flexibilité de la collerette 22 pourra notamment être améliorée par le creusement d'une rainure d'affaiblissement 23 circulaire, concentrique au rebord de ladite collerette 22, tel que cela est illustré sur la figure 3.

Selon une autre variante de réalisation, la collerette 22 pourra être réalisée dans un matériau plastique souple, du genre élastomère, par exemple en polyuréthane thermoplastique, qui sera solidarisé au moyeu 20, par exemple par surmoulage.

Avantageusement, la collerette 22 permettra une fixation rapide et simple du bouchon 15 par encliquetage sur le carter 3, et plus particulièrement dans une gorge 24 creusée dans la paroi dudit carter 3, sur la périphérie de l'orifice 14.

A ce titre, on notera que l'orifice 14 et le bouchon 15 pourront avantageusement être dépourvus de filetage, ce qui simplifie leur fabrication.

De préférence, le moyeu 20, et le cas échéant la collerette 22, est(sont) réalisé(s) d'un seul tenant dans un matériau polymère rigide, de préférence en polyamide du type PA66 ou en poly-oxyméthylène.

Le bouchon 15 pourra ainsi posséder une âme 20, 22 monolithique en plastique dur, alliant légèreté et excellente résistance à la corrosion.

Une telle âme 20, 22 sera en outre particulièrement simple et rapide à fabriquer, par exemple par moulage par injection ou par usinage.

Selon une variante de réalisation, le moyeu 20 est pourvu, sur sa périphérie, d'une garniture d'étanchéité 25 annulaire en matériau polymère souple, de préférence réalisée par surmoulage.

Avantageusement, l'utilisation d'une garniture d'étanchéité 25 faisant partie intégrante du bouchon 15, par fabrication, permettra un montage simplifié, rapide, et reproductible dudit bouchon 15 sur le carter 3.

De préférence, ladite garniture d'étanchéité 25 non seulement s'appuiera radialement contre le moyeu 20, mais également s'adossera axialement contre l'épaulement formé par la collerette 22. Ainsi, on assurera, au moyen d'une seule et même pièce, une étanchéité particulièrement efficace, tant radiale qu'axiale.

Le matériau polymère souple constitutif de la garniture d'étanchéité 25 pourra être un élastomère thermoplastique (« TPE »), et en particulier un polyuréthane thermoplastique (« TPU »).

A titre indicatif, le moyeu 20, et plus particulièrement sa partie dure (hors garniture d'étanchéité 25), pourra présenter un diamètre sensiblement compris entre 25 mm et 33 mm (lequel correspond le cas échéant au diamètre interne de la garniture d'étanchéité 25).

La garniture d'étanchéité 25 pourra quant à elle présenter un diamètre externe sensiblement compris entre 35 mm et 36 mm, et la collerette 22 un diamètre hors-tout D22 sensiblement compris entre 36 mm et 38 mm.

L'épaisseur brute E22 de la collerette 22 pourra être comprise entre 1 mm et 2 mm, et, le cas échéant, la profondeur (axiale) de la rainure d'affaiblissement 23 entre 0,5 mm et 1,5 mm.

Tel que cela est illustré sur la figure 4, le ressort 10 de rattrapage de jeu d'engrènement comporte de préférence une pluralité d'ergots de retenue 16, 17, 18, et de préférence trois ergots de retenue 16, 17, 18, répartis angulairement, de préférence à intervalles réguliers, autour de l'axe (XX') de la vis sans fin 4 et conçus pour pouvoir coopérer avec la paroi de guidage 21 du bouchon 15.

Avantageusement, l'utilisation de plusieurs points d'appui distants, et plus particulièrement de trois ergots 16, 17, 18 formant trois points d'appui par lesquels passe (géométriquement) un unique plan, permet d'obtenir un soutien stable et équilibré du ressort 10 contre la paroi de guidage 21, du type appui-plan (plan sur plan) glissant.

Une telle liaison cinématique en appui-plan quasi "parfait" autorise avantageusement un libre glissement radial fonctionnel, avec peu de frottement, de l'équipage mobile 4, 5 et des ergots 16, 17, 18 qui s'y trouvent embarqués, tout en évitant le décalage axial du ressort 10, ou encore le basculement voire l'arc-boutement dudit ressort 10 par rapport à l'axe (XX') de la vis sans fin 4.

De préférence, le ressort 10 de rattrapage de jeu comporte une lame 26 annulaire qui s'enroule (ou, plus globalement, qui est conçue pour s'enrouler) en couronne, dans le sens de son épaisseur, autour du premier palier 5.

Avantageusement, le ou les ergots de retenue 16, 17, 18 peuvent alors être formés par des languettes venues de matière avec le chant de ladite lame 26 et rabattues radialement.

Un tel ressort peut être fabriqué simplement, à partir du découpage et du pliage d'un même ruban de tôle, de préférence métallique.

Les ergots de retenue 16, 17, 18, sécants à la lame 26, pourront par ailleurs être avantageusement inclinés, de sorte à suivre sensiblement une enveloppe fictive conique.

A ce titre, lesdits ergots 16, 17, 18 présenteront de préférence à la fois une composante d'extension axiale (orientée vers l'extérieur du ressort 10, en direction du bouchon 15) et une composante d'extension radiale (orientée vers l'axe (XX')), ladite composante d'extension radiale étant préférentiellement majoritaire, c'est-à-dire plus importante que leur composante d'extension axiale.

De préférence, la lame 26 habillera angulairement la majorité, voire la quasi-totalité du premier palier 5, et plus particulièrement de la bague extérieure du roulement à billes, en formant sensiblement une spire autour dudit palier 5.

De préférence, tel que cela est notamment illustré sur les figures 2 à 4, le ressort de rattrapage de jeu 10 comporte un talon 27, ledit talon 27 étant engagé, en déport radial du premier palier 5, dans une rainure 30 qui est ménagée dans le carter 3, préférentiellement parallèlement à l'axe (XX'), et ce afin notamment de bloquer la rotation dudit ressort 10 autour de l'axe (XX') de la vis sans fin 4.

Ledit talon 27 forme une saillie radiale externe, qui marque un décrochement radial par rapport à la portion de la lame 26 qui épouse la courbure du premier palier 5.

Avantageusement, ledit talon 27 vient en appui élastique contre le fond de la rainure 30, afin de pouvoir créer et exercer la contrainte radiale de rattrapage de jeu sur le palier 5, et par conséquent sur la vis 4.

A cet effet, le talon 27 peut avantageusement être recourbé sensiblement en U pour former un étrier, en débordement radial de la lame 26 et du palier 5, étrier dont le dos, radialement externe, vient en appui contre le fond de la rainure 30.

Avantageusement, le talon 27 peut ainsi assurer une double fonction de compression radiale de la vis 4 et de retenue en rotation du ressort 10.

De préférence, le talon 27 est venu de matière avec la lame 26, dont il constitue préférentiellement un prolongement extrémal.

A ce titre, on notera que le talon 27 peut avantageusement être fendu, transversalement à l'axe (XX'), tel que cela est illustré sur les figures 3 et 4, en étant plus particulièrement constitué par la juxtaposition axiale des deux extrémités de la lame 26, qui se chevauchent angulairement sur une portion de la circonférence du ressort 10.

Lesdites extrémités pourront présenter chacune à cet effet une largeur (étendue axiale) inférieure ou égale à la demi-largeur (étendue axiale) de la lame 26, cette dernière pouvant du reste être sensiblement égale à la largeur (étendue axiale) du premier palier 5.

Avantageusement, un tel agencement de ressort 10, qui forme globalement d'un seul tenant une spire ouverte déformable, garantit la souplesse, l'équilibre, et la robustesse de la suspension élastique qui assure le rattrapage de jeu d'engrènement. Il permet également une fabrication simple.

Tel que cela est illustré notamment sur les figures 1 à 3, le ressort 10 sera avantageusement enfilé librement sur le pourtour externe du premier palier 5, et plus particulièrement sur le pourtour radialement externe de la bague extérieure du roulement à billes, l'axe dudit ressort 10 étant par ailleurs de préférence confondu avec celui (XX') de la vis sans fin 4 et/ou du palier 5.

De façon particulièrement préférentielle, le ou les ergots de retenue 16, 17, 18 forme(nt) un ou des organes de retenue bidirectionnels, agencés de manière à pouvoir coopérer d'une part avec le premier palier 5, afin de bloquer la translation axiale du ressort 10 dans un premier sens allant vers la zone d'engrènement au niveau de laquelle la vis sans fin 4 entre en contact avec la roue tangente 6, et d'autre part avec la paroi de guidage 21 du bouchon 15, afin de bloquer la translation dudit ressort 10 dans un second sens opposé au premier, ici en direction du bouchon 15 et de l'extérieur du carter 3.

Les mêmes ergots de retenue 16, 17, 18, maintenus axialement captifs dans un tronçon compris entre le chant du premier palier 5 et la paroi de guidage 21, pourront donc assurer simultanément le maintien axial du ressort dans les deux sens, ce qui permet de réaliser ledit maintien de manière très fiable, à peu de frais, par un montage simple et compact.

L'invention concerne bien entendu en tant que tel un module d'assistance de direction 2 pourvu d'un réducteur à engrenage 1 selon l'invention, dont la vis sans fin 4 est entraînée par un moteur électrique d'assistance 12 (esquissé en pointillés sur la figure 1), et dont la roue tangente 6 est conçue pour exercer, selon des lois d'assistance prédéfinies, un couple d'assistance sur un arbre de sortie 31 destiné à être couplé à une colonne de direction ou à une crémaillère de direction.

De façon préférentielle, l'arbre de sortie 31 portera un pignon 32 destiné à venir en prise sur une crémaillère de direction (non représentée), dont la translation commande, *via* des biellettes de direction reliées à des porte-fusées, l'orientation azimutale des roues directrices du véhicule.

L'invention concerne également un système de direction équipé d'un module d'assistance de direction 2 selon l'invention, ainsi qu'un véhicule, et plus particulièrement un véhicule automobile, du genre véhicule à roues, destiné par exemple au transport de personnes ou de marchandises, qui est pourvu d'un tel système de direction.

L'invention concerne enfin en tant que tel un bouchon 15 en matériau plastique pour carter 3 de module d'assistance de direction 2, ledit bouchon 15 comprenant d'une part une âme 20, 22 en matériau plastique rigide qui forme d'un seul tenant un moyeu 20 plein offrant une paroi de guidage 21 sensiblement plane et normale à l'axe générateur (XX') dudit bouchon, et une collerette 22 qui marque un épaulement radialement externe par rapport audit moyeu 20, à distance axiale de la paroi de guidage 21, en formant un clip élastique de fixation, et d'autre part une garniture d'étanchéité 25 annulaire en élastomère, rapportée et fixée, de préférence par surmoulage, sur ladite âme 20, 22 de sorte à entourer la périphérie du moyeu 20.

Avantageusement, un tel bouchon 15 sera multifonctions, assurant à lui seul sa fixation au carter 3 sur lequel il est rapporté, l'étanchéité dudit carter 3, et le contrôle du débattement axial du ressort de rattrapage de jeu d'engrènement 10, la paroi de guidage 21 matérialisant l'une des limites de la course axiale fonctionnelle du ressort 10, et empêchant par conséquent ledit ressort 10 de se déplacer axialement au-delà de ladite course fonctionnelle.

La réalisation du bouchon 15 intégralement dans un ou plusieurs matériaux plastiques, ou éventuellement composites à matrice polymère renforcée de fibres, garantira par ailleurs avantageusement la légèreté et l'insensibilité à la corrosion dudit bouchon 15.

Le moyeu 20 pourra en outre être lamé tel que cela a été précédemment décrit.

Bien entendu, l'invention n'est nullement limitée aux variantes de réalisation exposées ci-dessus, l'homme du métier étant notamment à même d'isoler ou de combiner librement entre elles l'une et/ou l'autre des caractéristiques décrites dans ce qui précède.

## Revendications

1. Réducteur à engrenage (1) comprenant un carter (3), une vis sans fin (4) qui est montée à rotation dans ledit carter (3) par au moins un premier palier (5), tel qu'un roulement à billes, et qui engrène avec une roue tangente (6), ledit réducteur comprenant également un ressort de rattrapage de jeu d'engrènement (10) interposé entre le carter (3) et le premier palier (5) afin de presser radialement ladite vis sans fin (4) contre la denture (7) de la roue tangente (6), la paroi du carter (3) étant percée, dans le prolongement de l'axe (XX') de la vis sans fin, d'un orifice (14) obturé par un bouchon (15), ledit réducteur (1) étant **caractérisé en ce que** le ressort de rattrapage de jeu d'engrènement (10) comprend au moins un ergot de retenue (16, 17, 18) qui fait saillie radialement à l'axe (XX') de la vis sans fin (4) et **en ce que** le moyeu (20) du bouchon (15) présente une paroi de guidage (21) sensiblement transverse à l'axe (XX') de la vis sans fin (4), qui est conçue pour venir se placer axialement en vis-à-vis dudit au moins un ergot de retenue (16, 17, 18), de sorte à pouvoir coopérer avec ledit au moins un ergot de retenue (16, 17, 18) pour faire obstacle au déplacement axial du ressort (10) au-delà d'une course fonctionnelle prédéterminée.

2. Réducteur selon la revendication 1 **caractérisé en ce que** le bouchon (15) présente une structure axialement étagée, qui comprend le moyeu (20), orienté vers le ressort (10), puis une collerette (22), orientée vers l'extérieur du carter (3), dont le diamètre (D22) est supérieur au diamètre dudit moyeu (20), de telle sorte que ladite collerette (22) forme un épaulement par rapport audit moyeu (20).

3. Réducteur selon la revendication 2 **caractérisé en ce que** la collerette (22) forme un clip élastique permettant la fixation du bouchon (15) au carter (3) par emboîtement.

4. Réducteur selon l'une des revendications précédentes **caractérisé en ce que** le moyeu (20) forme un cylindre plein lamé axialement, dont le fond du lamage axial forme la paroi de guidage (21).

5. Réducteur selon l'une des revendications précédentes **caractérisé en ce que** le jeu axial (J_{A}) ménagé entre l'au moins un ergot de retenue (16, 17, 18) et la paroi de guidage (21) est inférieur ou égal à 2 mm, de préférence inférieur ou égal à 1 mm, voire à 0,8 mm, et préférentiellement supérieur ou égal à 0,3 mm, voire à 0,5 mm.

6. Réducteur selon l'une des revendications précédentes **caractérisé en ce que** le moyeu (20) est pourvu, sur sa périphérie, d'une garniture d'étanchéité (25) annulaire en matériau polymère souple, de préférence réalisée par surmoulage.

7. Réducteur selon l'une des revendications précédentes **caractérisé en ce que** le moyeu (20), et le cas échéant la collerette (22), est(sont) réalisé(s) d'un seul tenant dans un matériau polymère rigide, de préférence en polyamide du type PA66 ou en poly-oxyméthylène.

8. Réducteur selon l'une des revendications précédentes **caractérisé en ce que** le ressort de rattrapage de jeu d'engrènement (10) comporte une pluralité d'ergots de retenue (16, 17, 18), et de préférence trois ergots de retenue (16, 17, 18), répartis angulairement, de préférence à intervalles réguliers, autour de l'axe (XX') de la vis sans fin (4) et conçus pour pouvoir coopérer avec la paroi de guidage (21) du bouchon (15).

9. Réducteur selon l'une des revendications précédentes **caractérisé en ce que** le ou les ergots de retenue (16, 17, 18) forme(nt) un ou des organes de retenue bidirectionnels, agencés de manière à pouvoir coopérer d'une part avec le premier palier (5), afin de bloquer la translation axiale du ressort (10) dans un premier sens allant vers la zone d'engrènement au niveau de laquelle la vis sans fin (4) entre en contact avec la roue tangente (6), et d'autre part avec la paroi de guidage (21) du bouchon (15), afin de bloquer la translation dudit ressort (10) dans un second sens opposé au premier.

10. Réducteur selon l'une des revendications précédentes **caractérisé en ce que** le ressort (10) de rattrapage de jeu comporte une lame (26) annulaire qui s'enroule en couronne, dans le sens de son épaisseur, autour du premier palier (5), le ou les ergots de retenue (16, 17, 18) étant formés par des languettes venues de matière avec le chant de ladite lame (26) et rabattues radialement.

11. Réducteur selon l'une des revendications précédentes **caractérisé en ce que** le ressort de rattrapage de jeu (10) comporte un talon (27) engagé, en déport radial du premier palier (5), dans une rainure (30) ménagée dans le carter (3), afin de bloquer la rotation dudit ressort (10) autour de l'axe (XX') de la vis sans fin (4).

12. Module d'assistance de direction (2) pourvu d'un réducteur à engrenage (1) selon l'une des revendications précédentes, dont la vis sans fin (4) est entraînée par un moteur électrique d'assistance (12), et dont la roue tangente (6) est conçue pour exercer un couple d'assistance sur un arbre de sortie (31) destiné à être couplé à une colonne de direction ou à une crémaillère de direction.

13. Utilisation d'un bouchon (15) comme butée axiale de maintien en position d'un ressort de rattrapage de jeu (10) au sein d'un réducteur à engrenage (1), ledit réducteur à engrenage (1) comprenant un carter (3), une vis sans fin (4) qui est montée à rotation dans ledit carter (3) par au moins un premier palier (5), tel qu'un roulement à billes, et qui engrène avec une roue tangente (6), le ressort de rattrapage de jeu d'engrènement (10) étant interposé entre le carter (3) et le premier palier (5) afin de presser radialement ladite vis sans fin (4) contre la denture (7) de la roue tangente (6), la paroi du carter (3) étant percée, dans le prolongement de l'axe (XX') de la vis sans fin, d'un orifice (14) obturé par le bouchon (15), ladite utilisation étant **caractérisée en ce que** le ressort de rattrapage de jeu d'engrènement (10) comprend au moins un ergot de retenue (16, 17, 18) qui fait saillie radialement à l'axe (XX') de la vis sans fin (4) tandis que le moyeu (20) du bouchon (15) présente une paroi de guidage (21) sensiblement transverse à l'axe (XX') de la vis sans fin (4), et **en ce que** l'on place ladite paroi de guidage (21) du bouchon (15) axialement en vis-à-vis dudit au moins un ergot de retenue (16, 17, 18), de sorte à ce que ladite paroi de guidage (21) coopère avec ledit au moins un ergot de retenue (16, 17, 18) pour faire obstacle au déplacement axial du ressort (10).

## Patentansprüche

1. Untersetzungsgetriebe (1), das ein Gehäuse (3), eine Endlosschraube (4), die drehend in dem Gehäuse (3) durch mindestens ein erstes Lager (5), wie zum Beispiel ein Kugellager, montiert ist und in ein Schneckenrad (6) eingreift, umfasst, wobei das Getriebe auch eine Eingriffsspiel-Nachstellfeder (10) umfasst, die zwischen dem Gehäuse (3) und dem ersten Lager (5) eingefügt ist, um radial die Endlosschraube (4) gegen die Verzahnung (7) des Schneckenrads (6) zu drücken, wobei die Wand des Gehäuses (3) in der Verlängerung der Achse (XX') der Endlosschraube mit einer Öffnung (14) durchbohrt ist, die durch einen Stopfen (15) verschlossen ist, wobei das Getriebe (1) **dadurch gekennzeichnet ist, dass** die Eingriffsspiel-Nachstellfeder (10) mindestens einen Haltedorn (16, 17, 18) umfasst, der radial an der Achse (XX') der Endlosschraube (4) vorsteht, und dadurch, dass die Nabe (20) des Stopfens (15) eine Führungswand (21) im Wesentlichen quer zu der Achse (XX') der Endlosschraube (4) aufweist, die konzipiert ist, um sich axial in Gegenüberlage zu dem mindestens einen Haltedorn (16, 17, 18) derart zu platzieren, dass sie mit dem mindestens einen Haltedorn (16, 17, 18) zusammenwirken kann, um sich der axialen Verlagerung der Feder (10) über einen vorbestimmten Funktionshub hinaus zu widersetzen.

2. Getriebe nach Anspruch 1, **dadurch gekennzeichnet, dass** der Stopfen (15) eine axial abgestufte Struktur aufweist, die die Nabe (20), die zu der Feder (10) ausgerichtet ist, dann einen Kragen (22), der zu der Außenseite des Gehäuses (3) ausgerichtet ist, dessen Durchmesser (D22) größer ist als der Durchmesser der Nabe (20) derart umfasst, dass der Kragen (22) einen Ansatz in Bezug zu der Nabe (20) bildet.

3. Getriebe nach Anspruch 2, **dadurch gekennzeichnet, dass** der Kragen (22) einen elastischen Clip bildet, der das Befestigen des Stopfens (15) an dem Gehäuse (3) durch Verschachteln erlaubt.

4. Getriebe nach einem der vorhergehenden Ansprüche, **dadurch gekennzeichnet, dass** die Nabe (20) einen massiven axial gesenkten Zylinder bildet, dessen Grund der axialen Senkung die Führungswand (21) bildet.

5. Getriebe nach einem der vorhergehenden Ansprüche, **dadurch gekennzeichnet, dass** das axiale Spiel (J_{A}), das zwischen dem mindestens einem Haltedorn (16, 17, 18) und der Führungswand (21) eingerichtet ist, kleiner oder gleich 2 mm ist, bevorzugt kleiner oder gleich 1 mm, ja sogar 0,8 mm und bevorzugt größer oder gleich 0,3 mm, ja sogar 0,5 mm.

6. Getriebe nach einem der vorhergehenden Ansprüche, **dadurch gekennzeichnet, dass** die Nabe (20) auf ihrem Umfang mit einer ringförmigen Dichtung (25) aus geschmeidigem Polymerwerkstoff, die bevorzugt durch Umspritzen gefertigt wird, versehen ist.

7. Getriebe nach einem der vorhergehenden Ansprüche, **dadurch gekennzeichnet, dass** die Nabe (20) und, gegebenenfalls, der Kragen (22) aus einem Stück aus einem starren Polymerwerkstoff gefertigt ist/sind, bevorzugt aus Polyamid des Typs PA66 oder aus Polyoximethylen.

8. Getriebe nach einem der vorhergehenden Ansprüche, **dadurch gekennzeichnet, dass** die Eingriffsspiel-Nachstellfeder (10) eine Vielzahl von Haltedornen (16, 17, 18) umfasst, und bevorzugt drei Haltedorne (16, 17, 18), die winkelig bevorzugt in regelmäßigen Abständen um die Achse (XX') der Endlosschraube (4) verteilt und konzipiert sind, um mit der Führungswand (21) des Stopfens (15) zusammenzuwirken.

9. Getriebe nach einem der vorhergehenden Ansprüche, **dadurch gekennzeichnet, dass** der oder die Haltedorne (16, 17, 18) ein oder mehrere bidirektionale Halteorgane bildet/bilden, die derart angeordnet sind, dass sie einerseits mit dem ersten Lager (5) zusammenwirken können, um die axiale Verschiebung der Feder (10) in eine erste Richtung, die zu der Eingriffszone geht, in deren Bereich die Endlosschraube (4) mit dem Schneckenrad (6) in Berührung tritt, zu blockieren, und andererseits mit der Führungswand (41) des Stopfens (15), um die Verschiebung der Feder (10) in eine zweite Richtung, die der ersten entgegengesetzt ist, zu blockieren.

10. Getriebe nach einem der vorhergehenden Ansprüche, **dadurch gekennzeichnet, dass** die Spielnachstellfeder (10) eine ringförmige Klinge (26) umfasst, die sich als Kranz in die Richtung ihrer Stärke um das erste Lager (5) aufrollt, wobei der oder die Haltedorne (16, 17, 18) aus Laschen gebildet ist/sind, die aus einem Stück mit der Kante der Klinge (26) bestehen und radial umgeschlagen sind.

11. Getriebe nach einem der vorhergehenden Ansprüche, **dadurch gekennzeichnet, dass** die Spielnachstellfeder (10) einen Absatz (27) umfasst, der in radialem Versatz von dem ersten Lager (5) in einer Nut (30), die in dem Gehäuse (3) eingerichtet ist, eingreift, um die Drehung der Feder (10) um die Achse (XX') der Endlosschraube (4) zu blockieren.

12. Lenkunterstützungsmodul (2), das mit einem Untersetzungsgetriebe (1) nach einem der vorhergehenden Ansprüche versehen ist, dessen Endlosschraube (4) von einem Hilfselektromotor (12) angetrieben wird, und dessen Schneckenrad (6) konzipiert ist, um ein Hilfsdrehmoment auf eine Ausgangswelle (31) auszuüben, die dazu bestimmt ist, mit einer Lenksäule oder einer Lenkzahnstange gekoppelt zu sein.

13. Einsatz eines Stopfens (15) als axialer Positionshalteanschlag einer Spielnachstellfeder (10) innerhalb eines Untersetzungsgetriebes (1), wobei das Untersetzungsgetriebe (1) ein Gehäuse (3), eine Endlosschraube (4), die drehend in dem Gehäuse (3) durch mindestens ein erstes Lager (5), wie zum Beispiel ein Kugellager, montiert ist und in ein Schneckenrad (6) eingreift, umfasst, wobei die Eingriffsspiel-Nachstellfeder (10) zwischen das Gehäuse (3) und das erste Lager (5) eingefügt ist, um die Endlosschraube (4) radial gegen die Verzahnung (7) des Schneckenrads (6) zu drücken, wobei die Wand des Gehäuses (3) in der Verlängerung der Achse (XX') der Endlosschraube mit einer Öffnung (14) durchbohrt ist, die durch den Stopfen (15) verschlossen ist, wobei der Gebrauch **dadurch gekennzeichnet ist, dass** die Eingriffsspiel-Rückstellfeder (10) mindestens einen Haltedorn (16, 17, 18) umfasst, der radial an der Achse (XX') der Endlosschraube (4) vorsteht, während die Nabe (20) des Stopfens (15) eine Führungswand (21) im Wesentlichen quer zu der Achse (XX') der Endlosschraube (4) aufweist, und dadurch, dass man die Führungswand (21) des Stopfens (15) axial in Gegenüberlage zu dem mindestens einen Haltedorn (16, 17, 18) derart platziert, dass die Führungswand (21) mit dem mindestens einen Haltedorn (16, 17, 18) zusammenwirkt um sich der axialen Verlagerung der Feder (10) zu widersetzen.

## Claims

1. A gear reducer (1) comprising a casing (3), a worm screw (4) which is rotatably mounted in said casing (3) by at least a first bearing (5), such as a ball bearing, and which meshes with a worm wheel (6), said reducer also comprising a meshing clearance compensation spring (10) interposed between the casing (3) and the first bearing (5) in order to radially press said worm screw (4) against the teeth (7) of the worm wheel (6), the wall of the casing (3) being pierced, in the extension of the axis (XX') of the worm screw, by an orifice (14) sealed by a stopper (15), said reducer (1) being **characterized in that** the meshing clearance compensation spring (10) comprises at least one retaining lug (16, 17, 18) which projects radially from the axis (XX') of the worm screw (4) and **in that** the hub (20) of the stopper (15) has a guide wall (21) substantially transverse to the axis (XX') of the worm screw (4), which is designed to be positioned axially facing said at least one retaining lug (16, 17, 18), so as to be able to cooperate with the at least one retaining lug (16, 17, 18) to hinder the axial displacement of the spring (10) beyond a predetermined operating stroke.

2. The reducer according to claim 1, **characterized in that** the stopper (15) has an axially stepped structure, which comprises the hub (20), directed toward the spring (10), and then a collar (22) which is directed toward the outside of the casing (3), whose diameter (D22) is greater than the diameter of said hub (20), such that said collar (22) forms a shoulder relative to said hub (20).

3. The reducer according to claim 2, **characterized in that** the collar (22) forms an elastic clip allowing the stopper (15) to be fixed to the casing (3) by nesting.

4. The reducer according to any of the preceding claims, **characterized in that** the hub (20) forms an axially counterbored solid cylinder, whose bottom of the axial counterbore forms the guide wall (21).

5. The reducer according to any of the preceding claims **characterized in that** the axial clearance (J_{A}) provided between the at least one retaining lug (16, 17, 18) and the guide wall (21) is smaller than or equal to 2 mm, preferably smaller than or equal to 1 mm, or even to 0.8 mm, and preferably greater than or equal to 0.3 mm, or even 0.5 mm.

6. The reducer according to any of the preceding claims **characterized in that** the hub (20) is provided, on its periphery, with an annular sealing gasket (25) made of a flexible polymer material, preferably made by overmolding.

7. The reducer according to any of the preceding claims **characterized in that** the hub (20) and, where appropriate, the collar (22), is/are made integrally in a rigid polymer material made preferably of a PA66-type polyamide or of polyoxymethylene.

8. The reducer according to any of the preceding claims **characterized in that** the meshing clearance compensation spring (10) includes a plurality of retaining lugs (16, 17,18), and preferably three retaining lugs (16,17,18), distributed angularly, preferably at regular intervals, about the axis (XX') of the worm screw (4) and designed to be able to cooperate with the guide wall (21) of the stopper (15).

9. The reducer according to any of the preceding claims **characterized in that** the retaining lugs(s) (16, 17, 18) form(s) one or more bidirectional retaining member(s), arranged to be able to cooperate, on the one hand, with the first bearing (5), in order to block the axial translation of the spring (10) in a first direction towards the meshing area at which the worm screw (4) comes into contact with the worm wheel (6) and, on the other hand, with the guide wall (21) of the stopper (15), in order to block the translation of said spring (10) in a second direction opposite to the first one.

10. The reducer according to any of the preceding claims **characterized in that** the clearance compensation spring (10) includes an annular blade (26) which is wound in a ring-like manner, in its thickness direction, about the first bearing (5), the retaining lug(s) (16, 17, 18) being formed by tabs integral with the edge of said blade (26) and radially folded back.

11. The reducer according to any of the preceding claims **characterized in that** the clearance compensation spring (10) includes a heel (27) engaged, in a radial offset from the first bearing (5), in a groove (30) provided in the casing (3), in order to block the rotation of said spring (10) about the axis (XX') of the worm screw (4).

12. A steering assist module (2) provided with a gear reducer (1) according to any of the preceding claims, whose worm screw (4) is driven by an electric assist motor (12), and whose worm wheel (6) is designed to exert an assist torque on an output shaft (31) intended to be coupled to a steering column or to a steering rack.

13. A use of a stopper (15) as an axial stop for holding in position a clearance compensation spring (10) within a gear reducer (1), said gear reducer (1) comprising a casing (3), a worm screw (4) which is rotatably mounted in said casing (3) by at least one first bearing (5), such as a ball bearing, and which meshes with a worm wheel (6), the meshing clearance compensation spring (10) being interposed between the casing (3) and the first bearing (5) in order to radially press said worm screw (4) against the teeth (7) of the worm wheel (6), the wall of the casing (3) being pierced, in the extension of the axis (XX') of the worm screw, by an orifice (14) sealed by the stopper (15), said use being **characterized in that** the meshing clearance compensation spring (10) comprises at least one retaining lug (16, 17, 18) projecting radially from the axis (XX') of the worm screw (4) whereas the hub (20) of the stopper (15) has a guide wall (21) substantially transverse to the axis (XX') of the worm screw (4), and **in that** said guide wall (21) of the stopper (15) is placed axially facing said at least one retaining lug (16, 17, 18), so that said guide wall (21) cooperates with said at least one retaining lug (16, 17, 18) to hinder the axial displacement of the spring (10).
